# EUROPÄISCHE PATENTANMELDUNG

(11) **EP 3 338 915 A1**
(43) Veröffentlichungstag der Anmeldung: **27.06.2018**
(21) Anmeldenummer: 16206208.7
(22) Anmeldetag: 22.12.2016
(51) Int. Cl.: B22F 3/105, B28B 1/00

(54) **VERFAHREN ZUR SCHICHTWEISEN FERTIGUNG EINES GRÜNLINGS AUS PULVER- ODER PASTENFÖRMIGEM WERKSTOFF MIT DEFINIERT ANGEORDNETEN SCHNEIDELEMENTEN**

(71) Anmelder: HILTI Aktiengesellschaft, 9494 Schaan (LI)
(72) Erfinder: Spring, Robert, 9467 Fruemsen (CH); Schneider, Roland, 6824 Schlins (AT); Zivcec, Maria, 9470 Buchs (CH)
(74) Vertreter: Hilti Aktiengesellschaft Corporate Intellectual Property

(57) **Zusammenfassung**

Verfahren zur schichtweisen Fertigung eines Grünlings (10) aus pulver- oder pastenförmigem Werkstoff () mit definiert angeordneten Schneidelementen basierend auf dreidimensionalen Daten des Grünlings (10), wobei der Grünling (10) in einer Aufbaurichtung (16) in N (N ≥ 2) aufeinanderfolgende zylinderförmige Querschnittsbereiche (11, 12, 13, 14, 15) aus einer zweidimensionalen Querschnittsfläche senkrecht zur Aufbaurichtung (16) und einer Schichtdicke parallel zur Aufbaurichtung (16) zerlegt wird, mit den Verfahrensschritten:
▪ die Querschnittsbereiche (11, 12, 13, 14, 15) des Grünlings (10) werden jeweils in Werkstoffbereiche, die aus dem pulver- oder pastenförmigen Werkstoff hergestellt werden, und Setzbereiche, in denen die Schneidelemente angeordnet werden, unterteilt,
▪ auf eine, die senkrecht zur Aufbaurichtung (16) angeordnet ist, werden die Werkstoffbereiche eines Querschnittsbereichs oder die Werkstoffbereiche mehrerer in Aufbaurichtung (16) aufeinanderfolgender Querschnittsbereiche (12, 13, 14, 15) aufgebracht, bis mindestens eine Kavität, die durch einen Setzbereich oder mehrere in Aufbaurichtung (16) aufeinanderfolgende Setzbereiche gebildet wird, in Aufbaurichtung (16) eine zum Anordnen der Schneidelemente erforderliche Einsatzhöhe aufweist, und
▪ in die Kavitäten, die die zum Anordnen der Schneidelemente erforderliche Einsatzhöhe aufweisen, wird mindestens ein Schneidelement angeordnet.

## Beschreibung

### Technisches Gebiet

Die vorliegende Erfindung betrifft ein Verfahren zur schichtweisen Fertigung eines Grünlings aus pulver- oder pastenförmigem Werkstoff mit definiert angeordneten Schneidelementen gemäß dem Oberbegriff des Anspruchs 1.

### Stand der Technik

Abrasive Bearbeitungswerkzeuge, wie Bohrkronen, Sägeblätter, Trennscheiben oder Schleifscheiben, umfassen Bearbeitungssegmente, die an einem rohr- oder scheibenförmigen Grundkörper befestigt werden. Abhängig vom Bearbeitungsverfahren des abrasiven Bearbeitungswerkzeugs werden die Bearbeitungssegmente als Bohrsegmente, Sägesegmente, Trennsegmente oder Schleifsegmente bezeichnet und unter dem Begriff "Bearbeitungssegmente" zusammengefasst. Die Bearbeitungssegmente werden aus pulverförmigem Werkstoff und Schneidelementen in Form von Hartstoffpartikeln aufgebaut. Dabei wird zwischen Bearbeitungssegmenten mit statistisch verteilten Hartstoffpartikeln und Bearbeitungssegmenten mit definiert angeordneten Hartstoffpartikeln unterschieden. Bei Bearbeitungssegmenten mit statistisch verteilten Hartstoffpartikeln werden der pulverförmige Werkstoff und die Hartstoffpartikel gemischt und in eine passende Werkzeugform eingefüllt und zunächst durch Kaltpressen zu einem Grünling geformt. Bei Bearbeitungssegmenten mit definiert angeordneten Hartstoffpartikeln wird der Grünling schichtweise aus pulverförmigem Werkstoff aufgebaut, in den die Hartstoffpartikel an definierten Positionen platziert werden. Die Grünlinge werden bei statistisch verteilten Hartstoffpartikeln und definiert angeordneten Hartstoffpartikeln durch Heißpressen und/oder Sintern zu einsatzfähigen Bearbeitungssegmenten verdichtet.

Bearbeitungssegmente mit statistisch verteilten Hartstoffpartikeln weisen mehrere Nachteile auf: Da sich die Hartstoffpartikel auch an der Oberfläche der Grünlinge befinden, weisen die zum Kaltpressen der Grünlinge notwendigen Werkzeugformen einen hohen Verschleiß auf. Außerdem entspricht die Verteilung der Hartstoffpartikel im Grünling nicht der anwendungstechnisch optimalen Verteilung. Die Nachteile von Bearbeitungssegmenten mit statistisch verteilten Hartstoffpartikeln führen dazu, dass für hochwertige Bearbeitungswerkzeuge trotz der höheren Kosten überwiegend Bearbeitungssegmente mit definiert angeordneten Hartstoffpartikeln eingesetzt werden.

EP 0 452 618 A1 beschreibt ein bekanntes Verfahren zur schichtweisen Fertigung eines Grünlings aus pulverförmigem Werkstoff mit Hartstoffpartikeln, die an definierten Positionen im pulverförmigen Werkstoff angeordnet werden. Das bekannte Verfahren basiert auf dreidimensionalen Daten des Grünlings und weist folgende Verfahrensschritte auf:
▪ der Grünling wird in einer Aufbaurichtung in N, N ≥ 2 aufeinanderfolgende zylinderförmige Querschnittsbereiche zerlegt, wobei jeder Querschnittsbereich aus einer zweidimensionalen Querschnittsfläche senkrecht zur Aufbaurichtung und einer Schichtdicke parallel zur Aufbaurichtung gebildet wird,
▪ auf eine Aufbauebene, die senkrecht zur Aufbaurichtung angeordnet ist, werden N, N ≥ 2 Pulverschichten des pulverförmigen Werkstoffs aufgebracht und
▪ die Hartstoffpartikel werden an den definierten Positionen im pulverförmigen Werkstoff angeordnet.

Die Hartstoffpartikel werden mittels einer Saugplatte aufgenommen und über dem Schichtaufbau positioniert. Durch eine Reduzierung der Ansaugkraft oder durch einen kurzen Druckluftstoß lösen sich die Hartstoffpartikel aus der Saugplatte und werden in die obere Pulverschicht des Schichtaufbaus platziert. Der Druckluftstoß darf nur so groß sein, dass der pulverförmige Werkstoff nicht verschoben wird und die Hartstoffpartikel an den vorgesehenen definierten Positionen der Verteilung angeordnet werden. Ein weiterer Nachteil besteht darin, dass die Hartstoffpartikel nur lose auf oder in der oberen Pulverschicht angeordnet sind. Beim Auftragen und Verteilen der nächsten Pulverschicht des pulverförmigen Werkstoffs mit Hilfe eines Auftragswerkzeugs in Form einer Rolle, eines Rakels oder einer Bürste können die Hartstoffpartikel vom Auftragswerkzeug aus ihren definierten Positionen verschoben werden und somit die Genauigkeit reduziert werden.

### Darstellung der Erfindung

Die Aufgabe der vorliegenden Erfindung besteht darin, bei der schichtweisen Fertigung von Grünlingen, die insbesondere zu Bearbeitungssegmenten für abrasive Bearbeitungswerkzeuge verdichtet werden, die Genauigkeit, mit der die vorgesehene Verteilung der Schneidelemente im Grünling aufgebaut wird, zu erhöhen. Dabei soll die vorgesehene Verteilung der Schneidelemente im Grünling auch bei der weiteren schichtweisen Fertigung des Grünlings beibehalten werden. Außerdem sollen nach Möglichkeit bereits bei der Fertigung des Grünlings Schutzmaßnahmen getroffen werden, die in einem nachfolgenden Verdichtungsprozess, beispielsweise durch Heißpressen oder Sintern, eine chemische Verbindung zwischen den Schneidelementen und dem pulver- oder pastenförmigen Werkstoff verhindern.

Diese Aufgabe wird bei dem eingangs genannten Verfahren zur schichtweisen Fertigung eines Grünlings aus pulver- oder pastenförmigem Werkstoff mit definiert angeordneten Schneidelementen erfindungsgemäß durch die Merkmale des unabhängigen Anspruchs 1 gelöst. Vorteilhafte Weiterbildungen sind in den abhängigen Ansprüchen angegeben.

Das Verfahren zur schichtweisen Fertigung eines Grünlings aus pulver- oder pastenförmigem Werkstoff mit definiert angeordneten Schneidelementen basiert auf dreidimensionalen Daten des Grünlings, wobei der Grünling in einer Aufbaurichtung in N, N ≥ 2 aufeinanderfolgende zylinderförmige Querschnittsbereiche aus einer zweidimensionalen Querschnittsfläche senkrecht zur Aufbaurichtung und einer Schichtdicke parallel zur Aufbaurichtung zerlegt wird, und weist erfindungsgemäß die Schritte auf:
▪ die Querschnittsbereiche des Grünlings werden jeweils in Werkstoffbereiche, die aus dem pulver- oder pastenförmigen Werkstoff hergestellt werden, und Setzbereiche, in denen die Schneidelemente angeordnet werden, unterteilt,
▪ auf eine Aufbauebene, die senkrecht zur Aufbaurichtung angeordnet ist, werden die Werkstoffbereiche eines Querschnittsbereichs oder die Werkstoffbereiche mehrerer in Aufbaurichtung aufeinanderfolgender Querschnittsbereiche aufgebracht, bis mindestens eine Kavität, die durch einen Setzbereich oder mehrere in Aufbaurichtung aufeinanderfolgende Setzbereiche gebildet wird, in Aufbaurichtung eine zum Anordnen der Schneidelemente erforderliche Einsatzhöhe aufweist, und
▪ in die Kavitäten, die die zum Anordnen der Schneidelemente erforderliche Einsatzhöhe aufweisen, wird mindestens ein Schneidelement angeordnet.

Das erfindungsgemäße Verfahren zur schichtweisen Fertigung eines Grünlings basiert auf dreidimensionalen Daten des Grünlings, der in Aufbaurichtung in N, N ≥ 2 zylinderförmige Querschnittsbereiche zerlegt wird, wobei jeder Querschnittsbereich als gerader Zylinderabschnitt aus einer beliebigen zweidimensionalen Querschnittsfläche senkrecht zur Aufbaurichtung und einer Schichtdicke parallel zur Aufbaurichtung aufgebaut ist. Die Schichtdicken der Querschnittsbereiche können gleich oder unterschiedlich sein, wobei üblicherweise gleiche Schichtdicken verwendet werden. Je kleiner die Schichtdicken sind, umso genauer kann eine gewünschte dreidimensionale Verteilung der Schneidelemente im Grünling hergestellt werden, allerdings erhöht sich die zur Fertigung des Grünlings erforderliche Bauzeit. Die Querschnittsbereiche bestehen aus Werkstoffbereichen, die aus dem pulver- oder pastenförmigen Werkstoff hergestellt werden, und Setzbereichen für die Schneidelemente, wobei Setzbereiche nur in Querschnittsbereichen mit Schneidelementen vorhanden sind. Die Schneidelemente werden in Kavitäten angeordnet, die beim Schichtaufbau des Grünlings aus den Setzbereichen aufgebaut werden. Die Kavitäten können aus einem Setzbereich oder mehreren in Aufbaurichtung aufeinanderfolgenden Setzbereichen bestehen.

Beim erfindungsgemäßen Verfahren zur schichtweisen Fertigung eines Grünlings werden beim Schichtaufbau mehrere Kavitäten im Grünling erzeugt, in die die Schneidelemente angeordnet werden. Für den Schichtaufbau eignen sich sämtliche schichtweise Verfahren, die aus pulver- oder pastenförmigem Werkstoff einen Grünling erzeugen; dazu gehören beispielsweise 3D-Drucken oder Binder Jetting. In die Kavitäten, die die erforderliche Einsatzhöhe aufweisen, wird mindestens ein Schneidelement angeordnet. Dabei können in eine Kavität ein Schneidelement, mehrere gleiche Schneidelemente oder verschiedene Schneidelemente angeordnet werden. Die Querschnittsform der Kavitäten und die Einsatzhöhe der Kavitäten können an die Geometrie der Schneidelemente angepasst werden. Je kleiner das Spiel zwischen der Kavität und dem Schneidelement ist, umso genauer kann die Position des Schneidelementes im Grünling erreicht werden. Die erforderliche Einsatzhöhe der Kavitäten ist unter anderem vom Typ und der Größe der Schneidelemente abhängig. Außerdem kann die erforderliche Einsatzhöhe der Kavitäten für gleiche Schneidelemente innerhalb des Grünlings verschieden sein und von der räumlichen Platzierung der Schneidelemente im Grünling abhängen. Über die Verteilung der Kavitäten im Grünling kann eine dreidimensionale Verteilung der Schneidelemente im Grünling erzeugt werden. Je kleiner die Schichtdicken der Querschnittsbereiche gewählt werden, umso genauer kann die Verteilung der Schneidelemente im Grünling an eine anwendungstechnisch optimale Verteilung der Schneidelemente angepasst werden, allerdings erhöht sich die zur Fertigung des Grünlings erforderliche Bauzeit.

Das erfindungsgemäße Verfahren zur schichtweisen Fertigung eines Grünlings ist für pulverförmige Werkstoffe, die auch als Werkstoffpulver bezeichnet werden, und pastenförmige Werkstoffe, die auch als Paste bezeichnet werden, geeignet. Unter dem Begriff "pulverförmige Werkstoffe" werden sämtliche Werkstoffe zusammengefasst, die im Ausgangszustand fest sind und aus losen, d.h. nicht verbundenen, Pulverpartikeln bestehen. Pulverförmige Werkstoffe können aus einem Werkstoffpulver bestehen oder als Gemisch aus verschiedenen Werkstoffpulvern zusammengesetzt sein. Unter dem Begriff "pastenförmige Werkstoffe" werden sämtliche Feststoff-Flüssigkeits-Gemische aus einer Flüssigkeit und einem hohen Gehalt an fein verteilten Festkörpern zusammengefasst, die im Ausgangszustand streichfest sind. Pastenförmige Werkstoffe lassen sich über den Feststoffgehalt, die Viskosität und/oder die chemische Zusammensetzung charakterisieren.

Unter dem Begriff "Schneidelement" werden sämtliche Schneidmittel für abrasive Bearbeitungssegmente zusammengefasst. Dazu gehören vor allem einzelne Hartstoffpartikel (Partikel von Hartstoffen), Verbundteile aus mehreren Hartstoffpartikeln und beschichtete oder gekapselte Hartstoffpartikel. Hartstoffe zeichnen sich durch eine besondere Härte aus. Dabei lassen sich Hartstoffe zum einen in natürliche und synthetische Hartstoffe und zum anderen in metallische und nichtmetallische Hartstoffe unterteilen. Zu den natürlichen Hartstoffen gehören u.a. natürliche Diamanten, Korund und andere harte Mineralien und zu den synthetischen Hartstoffen gehören u.a. synthetische Diamanten, hochschmelzende Karbide, Boride, Nitride und Silizide. Zu den metallischen Hartstoffen gehören u.a. die hochschmelzenden Karbide, Boride, Nitride und Silizide der Übergangsmetalle der vierten bis sechsten Gruppe des Periodensystems und zu den nichtmetallischen Hartstoffen gehören u.a. Diamant, Korund, andere harte Mineralien, Siliziumkarbid und Borkarbid.

In einer ersten Variante des Verfahrens ist die zum Anordnen der Schneidelemente erforderliche Einsatzhöhe der Kavitäten kleiner als ein minimaler Durchmesser der Schneidelemente. Bei Schneidelementen, die in Form von einzelnen Hartstoffpartikeln ausgebildet sind, werden üblicherweise Mischungen von Hartstoffpartikeln verwendet, die durch einen minimalen Durchmesser Dₘᵢₙ und einen maximalen Durchmesser Dₘₐₓ charakterisiert sind. Für Mischungen von Hartstoffpartikeln gilt üblicherweise, dass 95 % der Hartstoffpartikel grösser als der minimale Durchmesser Dₘᵢₙ sind. Bei einer Einsatzhöhe der Kavitäten, die kleiner als der minimale Durchmesser der Schneidelemente ist, sind die Schneidelemente nach dem Platzieren nicht vollständig in den Kavitäten angeordnet.

Die erste Variante eignet sich bei Bearbeitungssegmenten für abrasive Bearbeitungswerkzeuge insbesondere an einer Oberseite der Bearbeitungssegmente. Als Oberseite wird eine dem zu bearbeitenden Untergrund oder Werkstück zugewandte Seite der Bearbeitungssegmente bezeichnet und als Unterseite wird eine Seite der Bearbeitungssegmente bezeichnet, die mit dem rohr- oder scheibenförmigen Grundkörper eines abrasiven Bearbeitungswerkzeuges verbunden wird. Die abrasive Bearbeitung erfolgt über freiliegende Schneidelemente an der Oberseite der Bearbeitungssegmente. Während der Bearbeitung mit einem abrasiven Bearbeitungswerkzeug wird die Matrix (pulver- oder pastenförmiger Werkstoff nach dem Heißpressen und/oder Sintern) der Bearbeitungssegmente abgetragen und die tieferliegenden Schneidelemente werden an der Oberseite der Bearbeitungssegmente freigelegt. Bei bekannten abrasiven Bearbeitungswerkzeugen müssen die Bearbeitungssegmente an der Oberseite in der Regel geschärft werden, um Schneidelemente freizulegen. Das Schärfen der Bearbeitungssegmente kann bei Anwendung der ersten Variante entfallen. Beim Schichtaufbau wird nach dem Platzieren der Schneidelemente in die Kavitäten eine weitere Werkstoffschicht aufgetragen. Über die Schichtdicke der Werkstoffschicht kann bestimmt werden, ob und wie weit die Schneidelemente an der Oberseite vorstehen.

In einer alternativen zweiten Variante des Verfahrens ist die zum Anordnen der Schneidelemente erforderliche Einsatzhöhe der Kavitäten grösser als ein maximaler Durchmesser der Schneidelemente. Für Mischungen von Hartstoffpartikeln gilt üblicherweise, dass 95 % der Hartstoffpartikel kleiner als der maximale Durchmesser Dₘₐₓ sind. Bei einer Einsatzhöhe der Kavitäten, die grösser als der maximale Durchmesser der Schneidelemente ist, sind praktisch sämtliche Schneidelemente vollständig in den Kavitäten angeordnet. Die zweite Variante hat den Vorteil, dass die Schneidelemente sicher in den Kavitäten platziert sind und die Gefahr, dass Schneidelemente beim Auftragen einer weiteren Werkstoffschicht verschoben werden, weiter reduziert ist. Außerdem können die Kavitäten nach dem Platzieren der Schneidelemente mit Spezialwerkstoff befüllt werden, der die Schneidelemente nahezu vollständig umgibt. Die Verwendung von Spezialwerkstoff bietet sich an, wenn der schichtweise aufgebaute Grünling einer nachfolgenden Bearbeitung durch Heißpressen und/oder Sintern zur Verdichtung unterzogen wird.

In einer bevorzugten Weiterentwicklung des Verfahrens werden die Kavitäten, die die erforderliche Einsatzhöhe aufweisen, neben den Schneidelementen mit Spezialwerkstoff befüllt. Die Verwendung von Spezialwerkstoff bietet sich an, wenn der schichtweise aufgebaute Grünling zur Verdichtung einer nachfolgenden Bearbeitung durch Heißpressen und/oder Sintern unterzogen wird. Bei Bearbeitungssegmenten für abrasive Bearbeitungswerkzeuge können die Schneidelemente beim Heißpressen und/oder Sintern durch den verwendeten pulver- oder pastenförmigen Werkstoff beschädigt werden. Der Spezialwerkstoff soll einerseits eine chemische Verbindung mit dem pulver- oder pastenförmigen Werkstoff bilden und andererseits die Schneidelemente mechanisch binden, eine chemische Verbindung der Schneidelemente mit dem pulver- oder pastenförmigen Werkstoff ist unerwünscht. Die Eigenschaften des Spezialwerkstoffes werden an den pulver- oder pastenförmigen Werkstoff und die Schneidelemente angepasst. Der Spezialwerkstoff kann pulverförmig oder pastenförmig ausgebildet sein, wobei bei einem pulverförmigen Werkstoff vorteilhaft ein pulverförmiger Spezialwerkstoff und bei einem pastenförmigen Werkstoff vorteilhaft ein pastenförmiger Spezialwerkstoff verwendet wird. Als Spezialwerkstoffe für Hartstoffpartikel in Form von Diamantpartikeln eignen sich beispielsweise Kobaltpulver oder Bronzepulver.

In einer ersten Variante wird das Befüllen der Kavitäten, die die erforderliche Einsatzhöhe aufweisen, mit Spezialwerkstoff in einem Verfahrensschritt durchgeführt. Dabei kann der Spezialwerkstoff vor dem Anordnen der Schneidelemente oder nach dem Anordnen der Schneidelemente in die Kavitäten eingefüllt werden. Das einteilige Füllverfahren mit Spezialwerkstoff hat gegenüber einem zweiteiligen Füllverfahren, bei dem das Befüllen mit Spezialwerkstoff in zwei Verfahrensschritten durchgeführt wird, den Vorteil, dass die erforderliche Bauzeit kürzer ist.

Besonders bevorzugt wird das Befüllen der Kavitäten mit Spezialwerkstoff vor dem Anordnen der Schneidelemente durchgeführt. Die Kavitäten, die die erforderliche Einsatzhöhe aufweisen, werden vor dem Anordnen der Schneidelemente mit Spezialwerkstoff befüllt. Die Schneidelemente werden in den Spezialwerkstoff platziert und nach Möglichkeit so weit in den Spezialwerkstoff gedrückt, dass die Schneidelemente vollständig von Spezialwerkstoff umgeben sind.

Alternativ wird das Befüllen der Kavitäten mit Spezialwerkstoff nach dem Anordnen der Schneidelemente durchgeführt. Die Kavitäten, die die erforderliche Einsatzhöhe aufweisen, werden nach dem Anordnen der Schneidelemente mit Spezialwerkstoff befüllt. Die Variante, den Spezialwerkstoff nach dem Anordnen der Schneidelemente einzufüllen, kann genutzt werden, wenn die Schneidelemente mit einer hohen Genauigkeit im Grünling angeordnet werden sollen. Die Schneidelemente können mit Hilfe eines Klebemittels in den Kavitäten befestigt werden. Das Risiko, dass die Position und Orientierung der Schneidelemente beim Befüllen der Kavitäten mit Spezialwerkstoff verändert wird, ist durch das Klebemittel deutlich reduziert. Nachteilig könnte sein, dass die Schneidelemente nicht vollständig von Spezialwerkstoff umgeben sind und das Risiko einer chemischen Verbindung zwischen den Schneidelementen und dem pulverförmigen Werkstoff grösser ist als in der Variante, in der das Befüllen der Kavitäten mit Spezialwerkstoff vor dem Anordnen der Schneidelemente erfolgt.

In einer alternativen zweiten Variante wird das Befüllen der Kavitäten, die die erforderliche Einsatzhöhe aufweisen, mit Spezialwerkstoff in zwei Verfahrensschritten durchgeführt, wobei ein erster Teil des Spezialwerkstoffes vor dem Anordnen der Schneidelemente in die Kavitäten eingefüllt wird, die Schneidelemente in den ersten Teil des Spezialwerkstoffes platziert werden und ein zweiter Teil des Spezialwerkstoffes nach dem Anordnen der Schneidelemente in die Kavitäten eingefüllt wird. Das zweiteilige Füllverfahren mit Spezialwerkstoff hat den Vorteil, dass die Schneidelemente vollständig von Spezialwerkstoff umgeben sind und eine chemische Verbindung zwischen den Schneidelementen und dem pulver- oder pastenförmigen Werkstoff vollständig verhindert wird, allerdings ist die erforderliche Bauzeit etwa doppelt so lang wie beim einteiligen Füllverfahren.

In einer bevorzugten Weiterentwicklung des Verfahrens werden die Schneidelemente zumindest teilweise mit einem Klebemittel in den Kavitäten befestigt. Dabei werden die Eigenschaften des verwendeten Klebemittels an den pulver- oder pastenförmigen Werkstoff und an die Schneidelemente angepasst. Die Verwendung eines Klebemittels hat den Vorteil, dass die Schneidelemente sicher in den Kavitäten platziert sind und die Gefahr, dass die Schneidelemente beim Auftragen einer weiteren Werkstoffschicht verschoben werden, weiter reduziert ist. Schneidelemente, wie einzelne Hartstoffpartikel, weisen eine Orientierung auf und sollten in der richtigen Orientierung in der Kavität platziert werden. Schneidelemente, die mit Klebemittel in den Kavitäten befestigt sind, behalten ihre definierten Positionen und Orientierungen im Grünling, der mit hoher Genauigkeit aufgebaut wird.

Besonders bevorzugt werden die Kavitäten, die die erforderliche Einsatzhöhe aufweisen, vor dem Anordnen der Schneidelemente mit dem Klebemittel befüllt. Das Klebemittel wird in die Kavitäten, die die erforderliche Einsatzhöhe aufweisen, eingefüllt und die Schneidelemente werden im Klebemittel platziert, solange das Klebemittel noch nicht ausgehärtet ist. Nach dem Aushärten des Klebemittels kann die Kavität mit einem Spezialwerkstoff befüllt werden oder der Schichtaufbau des Grünlings kann fortgesetzt werden.

Alternativ werden die Schneidelemente vor dem Anordnen der Schneidelemente in den Kavitäten zumindest teilweise mit dem Klebemittel benetzt. Die mit dem Klebemittel benetzten Schneidelemente werden mit Hilfe einer Platziereinrichtung in den Kavitäten, die die erforderliche Einsatzhöhe aufweisen, platziert, solange das Klebemittel noch nicht ausgehärtet ist. Nach dem Aushärten des Klebemittels sind die Schneidelemente an der gewünschten Position im Grünling befestigt und der Schichtaufbau des Grünlings kann fortgesetzt werden. Alternativ kann die Kavität kann mit Spezialwerkstoff befüllt werden, bevor der Schichtaufbau des Grünlings fortgesetzt wird.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: einen ersten Grünling, der mit Hilfe des erfindungsgemäßen Verfahrens zur schichtweisen Fertigung aus fünf in einer Aufbaurichtung übereinander liegenden zylinderförmigen Querschnittsbereichen hergestellt wird;
- FIGN. 2A-E: die fünf Querschnittsbereiche des ersten Grünlings der FIG. 1, die aus einer Querschnittsfläche senkrecht zur Aufbaurichtung und einer Schichtdicke parallel zur Aufbaurichtung bestehen;
- FIGN. 3A, B: einen ersten und zweiten Querschnitt durch den ersten Grünling der FIG. 1 parallel zur Aufbaurichtung entlang der Schnittebenen A-A in den FIGN. 2A-E (FIG. 3A) und entlang der Schnittebenen B-B in den FIGN. 2A-E (FIG. 3B);
- FIGN. 4A-T: die aufeinander folgenden Verfahrensschritte des erfindungsgemäßen Verfahrens zur schichtweisen Fertigung des ersten Grünlings aus einem pulverförmigen Werkstoff mit definiert angeordneten Schneidelementen;
- FIGN. 5A-O: eine zweite Variante des erfindungsgemäßen Verfahrens zur schichtweisen Fertigung eines zweiten Grünlings aus einem pulverförmigen Werkstoff mit definiert angeordneten ersten und zweiten Schneidelementen;
- FIGN. 6A-H: eine dritte Variante des erfindungsgemäßen Verfahrens zur schichtweisen Fertigung eines dritten Grünlings aus einem pastenförmigen Werkstoff mit definiert angeordneten Schneidelementen; und
- FIGN. 7A-F: die Werkstoff- und Einsatz-Schablonen, die bei der dritten Variante des erfindungsgemäßen Verfahrens zur schichtweisen Fertigung des dritten Grünlings aus einem pastenförmigen Werkstoff eingesetzt werden.

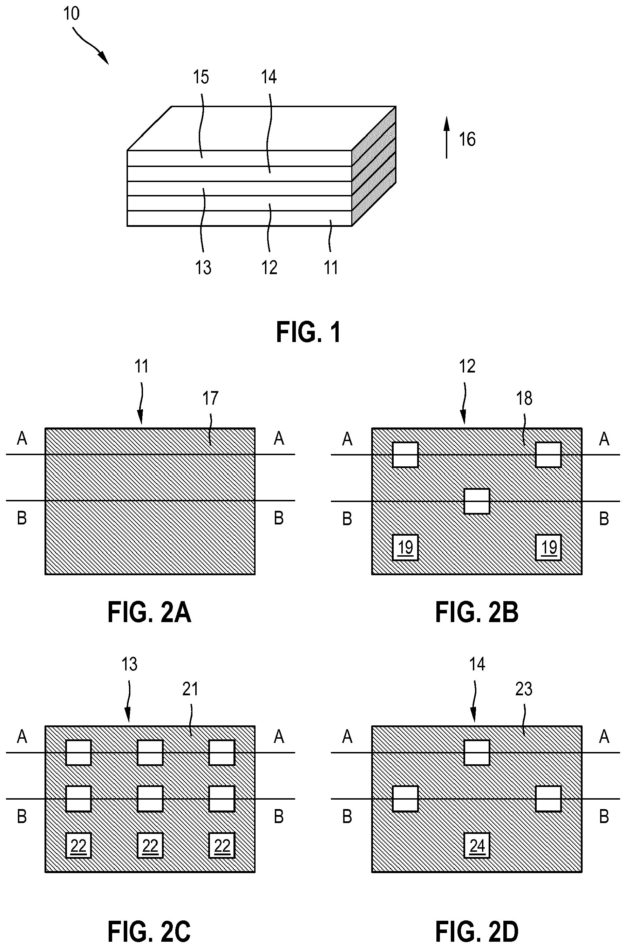

**FIG. 1** zeigt einen als Quader ausgebildeten Grünling **10,** der mit Hilfe des erfindungsgemäßen Verfahrens zur schichtweisen Fertigung eines Grünlings aus pulver- oder pastenförmigem Werkstoff mit definiert angeordneten Schneidelementen hergestellt wird und im Folgenden als erster Grünling 10 bezeichnet wird. Der erste Grünling 10 wird in einem Schichtaufbau aus fünf übereinander liegenden zylinderförmigen Querschnittsbereichen **11, 12, 13, 14, 15** hergestellt, die in einer Aufbaurichtung **16** aufeinander gestapelt werden. Die zylinderförmigen Querschnittsbereiche 11-15 weisen parallel zur Aufbaurichtung 16 eine Schichtdicke **dᵢ,** i = 1 bis 5 und senkrecht zur Aufbaurichtung 16 eine Querschnittsfläche auf. Die Schichtdicken dᵢ, i = 1 bis 5 können einheitlich sein oder die einzelnen Querschnittsbereiche 11-15 weisen unterschiedliche Schichtdicken auf.

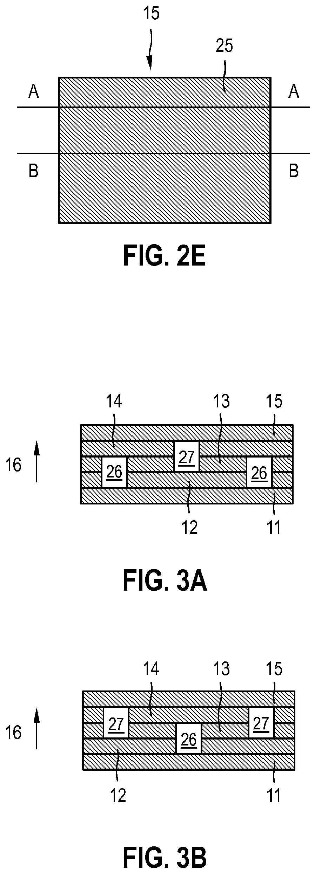

Um den ersten Grünling 10 im Schichtaufbau herstellen zu können, wird der Quader 10 in Aufbaurichtung 16 in die fünf zylinderförmigen Querschnittsbereiche 11-15 zerlegt, die in den **FIGN. 2A-E**dargestellt sind. Dabei zeigt FIG. 2A den ersten Querschnittsbereich 11, FIG. 2B den zweiten Querschnittsbereich 12, FIG. 2C den dritten Querschnittsbereich 13, FIG. 2D den vierten Querschnittsbereich 14 und FIG. 2E den fünften Querschnittsbereich 15. Jeder Querschnittsbereich 11-15 des ersten Grünlings 10 umfasst einen oder mehrere Werkstoffbereiche, die aus pulver- oder pastenförmigem Werkstoff hergestellt werden, und kann einen oder mehrere Setzbereiche aufweisen. Die Setzbereiche bilden Kavitäten für Schneidelemente, die im Quader 10 angeordnet werden sollen. Die Kavitäten können aus einem Setzbereich oder mehreren in Aufbaurichtung aufeinander folgenden Setzbereichen bestehen.

Zur Unterscheidung der Werkstoffbereiche und Setzbereiche werden die Werkstoffbereiche des i-ten Querschnittsbereichs als i-te Werkstoffbereiche und die Setzbereiche des i-ten Querschnittsbereichs als i-te Setzbereiche bezeichnet. Der erste Querschnittsbereich 11 umfasst einen ersten Werkstoffbereich **17,** der zweite Querschnittsbereich 12 umfasst einen zweiten Werkstoffbereich **18** und fünf zweite Setzbereiche **19,** der dritte Querschnittsbereich 13 umfasst einen dritten Werkstoffbereich **21** und neun dritte Setzbereiche **22,** der vierte Querschnittsbereich 14 umfasst einen vierten Werkstoffbereich **23** und vier vierte Setzbereiche **24** und der fünfte Querschnittsbereich 15 umfasst einen fünften Werkstoffbereich **25.**

**FIGN. 3A****, B** zeigen einen ersten und zweiten Querschnitt durch den ersten Grünling 10 der FIG. 1 parallel zur Aufbaurichtung 16 entlang der Schnittebenen A-A in den FIGN. 2A-E (FIG. 3A) und entlang der Schnittebenen B-B in den FIGN. 2A-E (FIG. 3B). Die fünf zylinderförmigen Querschnittsbereiche 11-15 des ersten Grünlings 10 sind in Aufbaurichtung 16 übereinander angeordnet.

Beim Schichtaufbau des ersten Grünlings 10 werden neun Kavitäten aufgebaut, in die Schneidelemente angeordnet werden. Die neun Kavitäten lassen sich in eine erste Gruppe von fünf ersten Kavitäten **26** und eine zweite Gruppe von vier zweiten Kavitäten **27** unterteilen. Die ersten Kavitäten 26 befindet sich im zweiten und dritten Querschnittsbereich 12, 13 und werden von den übereinander angeordneten zweiten und dritten Setzbereichen 19, 22 gebildet, die zweiten Kavitäten 27 befindet sich im dritten und vierten Querschnittsbereich 13, 14 und werden von den übereinander angeordneten dritten und vierten Setzbereichen 22, 24 gebildet. FIG. 3A zeigt zwei erste Kavitäten 26 und eine zweite Kavität 27 und FIG. 3B zeigt eine erste Kavität 26 und zwei zweite Kavitäten 27.

Im Ausführungsbeispiel des ersten Grünlings 10 weisen die ersten und zweiten Kavitäten 26, 27 die gleiche Querschnittsform und die gleiche Einsatzhöhe auf. Alternativ können die ersten Kavitäten 26 eine erste Querschnittsform und eine erste Einsatzhöhe und die zweiten Kavitäten 27 eine zweite Querschnittsform und eine zweite Einsatzhöhe aufweisen, die voneinander verschieden sind. Unterschiedliche Querschnittsformen und/oder unterschiedliche Einsatzhöhen für die ersten und zweiten Kavitäten bieten sich an, wenn unterschiedliche erste und zweite Schneidelemente in den Kavitäten angeordnet werden.

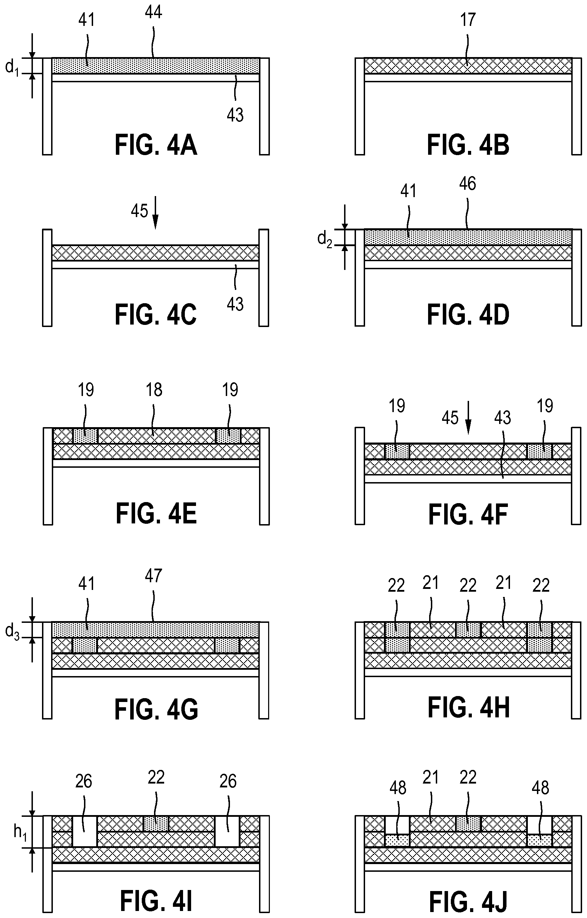

**FIGN. 4A-T** zeigen die aufeinanderfolgenden Verfahrensschritte des erfindungsgemäßen Verfahrens zur schichtweisen Fertigung des ersten Grünlings 10 der FIG. 1 aus pulverförmigem Werkstoff **41** mit definiert angeordneten Schneidelementen **42.** Der erste Grünling 10 wird aus dem pulverförmigen Werkstoff 41 und Schneidelementen 42 hergestellt, die als einzelne Hartstoffpartikel 42 ausgebildet sind. Die Hartstoffpartikel 42 entstammen einer Mischung von Hartstoffpartikeln, die durch einen minimalen Durchmesser **Dₘᵢₙ** und einen maximalen Durchmesser **Dₘₐₓ** charakterisiert sind, wobei 95 % der Hartstoffpartikel grösser als der minimale Durchmesser Dₘᵢₙ und kleiner als der maximale Durchmesser Dₘₐₓ sind.

Der erste Grünling 10 wird schichtweise mit Hilfe einer Vorrichtung hergestellt, die eine höhenverstellbare Aufbauebene **43,** eine Pulverzuführung und einen Druckkopf umfasst. Mit Hilfe der Pulverzuführung wird eine erste Pulverschicht **44** des pulverförmigen Werkstoffs 41 mit der ersten Schichtdicke d₁ aufgetragen (FIG. 4A). Der Druckkopf trägt im ersten Werkstoffbereich 17 eine erste Klebeschicht auf, die die losen Pulverpartikel der ersten Pulverschicht 44 im ersten Werkstoffbereich 17 verbindet (FIG. 4B). Die Aufbauebene 43 wird in einer Verstellrichtung **45** parallel zur Aufbaurichtung 16 um die zweite Schichtdicke d₂ abgesenkt (FIG. 4C) und eine zweite Pulverschicht **46** des pulverförmigen Werkstoffs 41 wird mit Hilfe der Pulverzuführung aufgetragen (FIG. 4D). Der Druckkopf trägt im zweiten Werkstoffbereich 18 eine zweite Klebeschicht auf, die die losen Pulverpartikel der zweiten Pulverschicht 46 im zweiten Werkstoffbereich 18 verbindet, wobei die Pulverpartikel in den zweiten Setzbereichen 19 nicht verbunden werden (FIG. 4E). Die Aufbauebene 43 wird in Verstellrichtung 45 um die dritte Schichtdicke d₃ abgesenkt (FIG. 4F) und eine dritte Pulverschicht **47** des pulverförmigen Werkstoffs 41 wird mit Hilfe der Pulverzuführung aufgetragen (FIG. 4G). Der Druckkopf trägt im dritten Werkstoffbereich 21 eine dritte Klebeschicht auf, die die losen Pulverpartikel der dritten Pulverschicht 47 im dritten Werkstoffbereich 21 verbindet, wobei die Pulverpartikel in den dritten Setzbereichen 22 nicht verbunden werden (FIG. 4H).

Die Einsatzhöhe der ersten Kavitäten 26 ist nach dem Auftragen der dritten Pulver- und Klebeschichten erreicht und die Hartstoffpartikel 42 können in den ersten Kavitäten 26 angeordnet werden. Die Einsatzhöhe der ersten Kavitäten 26 wird im Folgenden als erste Einsatzhöhe **h₁** bezeichnet. Im Ausführungsbeispiel ist die erste Einsatzhöhe h₁ grösser als der maximale Durchmesser Dₘₐₓ der Hartstoffpartikel 42. Eine erste Einsatzhöhe h₁, die grösser als der maximale Durchmesser Dₘₐₓ der Hartstoffpartikel 42 ist, hat den Vorteil, dass die platzierten Hartstoffpartikel 42 nahezu vollständig in den ersten Kavitäten 26 angeordnet sind und die Gefahr, dass Hartstoffpartikel 42 beim Auftragen einer weiteren Pulverschicht verschoben werden, weiter reduziert ist. Außerdem können die Hartstoffpartikel 42 von einem Spezialwerkstoff, der von dem pulverförmigen Werkstoff 41 verschieden ist, umgeben werden. Durch den Spezialwerkstoff können die Hartstoffpartikel 42 in einem folgenden Verdichtungsprozess beispielsweise durch Heißpressen und/oder Sintern vor Beschädigungen durch chemische Reaktionen mit dem pulverförmigen Werkstoff 41 geschützt werden. Als Spezialwerkstoffe für Hartstoffpartikel in Form von Diamantpartikeln eignen sich beispielsweise Kobaltpulver oder Bronzepulver.

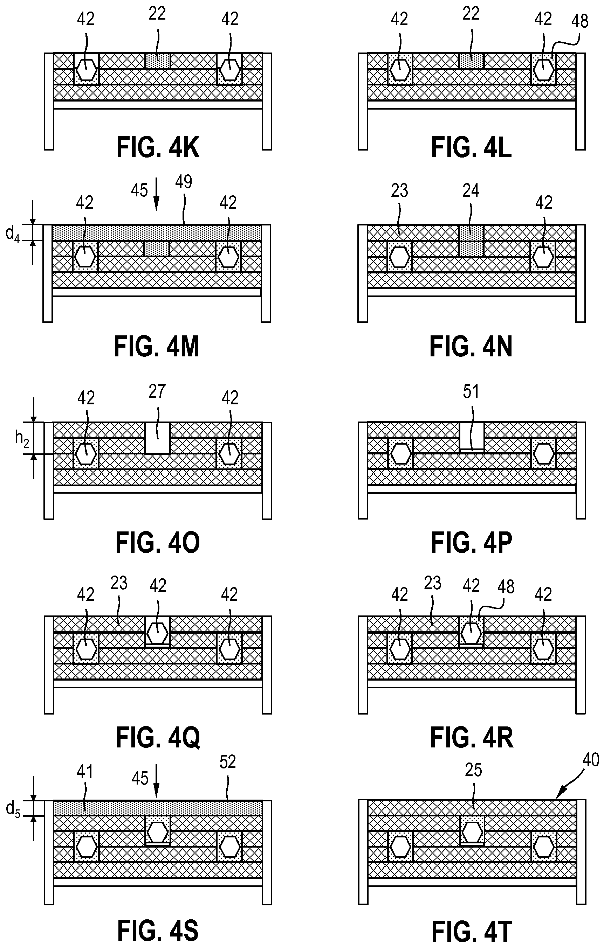

Bei der gezeigten ersten Variante des erfindungsgemäßen Verfahrens zur Fertigung des ersten Grünlings 10 werden die Hartstoffpartikel 42 von einem Spezialwerkstoff **48** umgeben. Zunächst werden die losen Pulverpartikel des pulverförmigen Werkstoffs 41 aus den ersten Kavitäten 26 entfernt (FIG. 4I). Dazu wird beispielsweise eine erste Schablone auf dem Schichtaufbau platziert, die die ersten Kavitäten 26 freigibt, und die losen Pulverpartikel des pulverförmigen Werkstoffs 41 werden mittels einer Absaugeinrichtung aus den ersten Kavitäten 26 durch Absaugen entfernt. Nach dem Absaugen des pulverförmigen Werkstoffs 41 werden die ersten Kavitäten 26 teilweise mit dem Spezialwerkstoff 48 befüllt (FIG. 4J), die Hartstoffpartikel 42 werden in den Spezialwerkstoff 48 platziert (FIG. 4K) und die ersten Kavitäten 26 werden anschließend vollständig mit dem Spezialwerkstoff 48 befüllt (FIG. 4L). Diese Variante hat den Vorteil, dass die Hartstoffpartikel 42 vollständig von dem Spezialwerkstoff 48 umgeben sind und die Gefahr, dass die Hartstoffpartikel 42 beim Heißpressen und/oder Sintern durch den pulverförmigen Werkstoff 41 beschädigt werden, so weit wie möglich reduziert ist.

Nachdem die ersten Kavitäten 26 vollständig mit dem Spezialwerkstoff 48 befüllt sind, wird der Schichtaufbau des ersten Grünlings 10 fortgesetzt. Die Aufbauebene 43 wird in Verstellrichtung 45 um die vierte Schichtdicke d₄ abgesenkt und eine vierte Pulverschicht **49** des pulverförmigen Werkstoffs 41 wird mit Hilfe der Pulverzuführung aufgetragen (FIG. 4M). Der Druckkopf trägt im vierten Werkstoffbereich 23 eine vierte Klebeschicht auf, die die losen Pulverpartikel der vierten Pulverschicht 49 im vierten Werkstoffbereich 23 verbindet, wobei die Pulverpartikel in den vierten Setzbereichen 24 nicht verbunden werden (FIG. 4N).

Die Einsatzhöhe der zweiten Kavitäten 27 ist nach dem Auftragen der vierten Pulver- und Klebeschicht erreicht und die Hartstoffpartikel 42 können in den zweiten Kavitäten 27 angeordnet werden. Die Einsatzhöhe der zweiten Kavitäten 27 wird im Folgenden als zweite Einsatzhöhe **h₂** bezeichnet, wobei die zweite Einsatzhöhe h₂ grösser als der maximale Durchmesser Dₘₐₓ der Hartstoffpartikel 42 ist. Um die Hartstoffpartikel 42, die in den zweiten Kavitäten 27 angeordnet werden, vor Beschädigungen durch chemische Reaktionen mit dem pulverförmigen Werkstoff 41 zu schützen, werden die Hartstoffpartikel 42 der zweiten Kavitäten 27 wie die Hartstoffpartikel 42 der ersten Kavitäten 26 in den Spezialwerkstoff 48 eingebettet. Das Befüllen der zweiten Kavitäten 27 mit den Hartstoffpartikeln 42 und dem Spezialwerkstoff 48 kann analog zu dem in den FIGN. 4J, K, L gezeigten zweiteiligen Füllverfahren der ersten Kavitäten 26 erfolgen, bei dem ein erster Teil des Spezialwerkstoffes 48 vor dem Anordnen der Hartstoffpartikel 42 und ein zweiter Teil des Spezialwerkstoffes 48 nach dem Anordnen der Hartstoffpartikel 42 eingefüllt wird.

Um den Aufwand bei der schichtweisen Fertigung des ersten Grünlings 10 zu reduzieren, kann das zweiteilige Füllverfahren der ersten Kavitäten 26 mit dem Spezialwerkstoff 48 vereinfacht werden. Die Alternative sieht vor, dass die Hartstoffpartikel 42 nach dem Absaugen der losen Pulverpartikel in den Kavitäten platziert werden und die Kavitäten nach dem Anordnen der Hartstoffpartikel 42 mit dem Spezialwerkstoff 48 befüllt werden. Am Beispiel der zweiten Kavitäten 27 wird die Alternative, die als einteiliges Füllverfahren bezeichnet wird, beschrieben. Bei der Herstellung von Grünlingen wird in der Regel das einteilige oder zweiteilige Füllverfahren für den Spezialwerkstoff 48 eingesetzt. Das einteilige Füllverfahren wird am Beispiel der zweiten Kavitäten 27 beschrieben, kann aber ebenso beim Befüllen der ersten Kavitäten 26 mit Spezialwerkstoff 48 angewendet werden.

Die losen Pulverpartikel werden im Bereich der zweiten Kavitäten 27 mit Hilfe der Absaugeinrichtung abgesaugt (FIG. 4O) Um die Orientierung der Hartstoffpartikel 42 in den zweiten Kavitäten 27 zu gewährleisten, kann ein Klebemittel **51** verwendet werden, dass die Hartstoffpartikel 42 befestigt. Die Verwendung des Klebemittels 51 hat den Vorteil, dass die Orientierungen und Positionen der Hartstoffpartikel 42 beim Auftragen einer weiteren Werkstoffschicht oder eines Spezialwerkstoffs nicht verändert werden. Die Eigenschaften des verwendeten Klebemittels werden an den pulverförmigen Werkstoff 41, die Hartstoffpartikel 42 und/oder den Spezialwerkstoff 48 angepasst. Die zweiten Kavitäten 27 werden mit dem Klebemittel 51 befüllt (FIG. 4P), die Hartstoffpartikel 42 werden in das Klebemittel 51 platziert (FIG. 4Q), solange das Klebemittel 51 noch nicht ausgehärtet ist, und die zweiten Kavitäten 27 werden nach dem Aushärten des Klebemittels 51 mit dem Spezialwerkstoff 48 befüllt (FIG. 4R). Beim beschriebenen einteiligen Füllverfahren werden zunächst die Hartstoffpartikel 42 in den zweiten Kavitäten 27 angeordnet und die zweiten Kavitäten 27 werden anschließend mit Spezialwerkstoff 48 befüllt. Alternativ kann beim einteiligen Füllverfahren zunächst der Spezialwerkstoff 48 in die zweiten Kavitäten 27 eingefüllt werden und anschließend werden die Hartstoffpartikel 42 in den Spezialwerkstoff 48 platziert.

Im Ausführungsbeispiel stimmen die erste Einsatzhöhe h₁ der ersten Kavitäten 26 und die zweite Einsatzhöhe h₂ der zweiten Kavitäten 27 überein. Alternativ können die erste und zweite Einsatzhöhe h₁, h₂ verschieden sein. Die Verwendung von Kavitäten mit unterschiedlicher Einsatzhöhe, in die der gleiche Typ von Schneidelementen angeordnet wird, bietet sich vorteilhaft bei Grünlingen an, die zu Bearbeitungssegmenten für abrasive Bearbeitungswerkzeuge weiterverarbeitet werden. Bei abrasiven Bearbeitungswerkzeugen müssen an der Oberseite der Bearbeitungssegmente Schneidelemente freiliegen, die einen Untergrund oder ein Werkstück bearbeiten. Dazu werden die Bearbeitungssegmente üblicherweise geschärft, bis an der Oberseite Schneidelemente freigelegt sind. Das Schärfen der Bearbeitungssegmente kann entfallen oder zumindest reduziert werden, wenn die Schneidelemente im Bereich der Oberseite in Kavitäten angeordnet werden, deren Einsatzhöhe kleiner als ein minimaler Durchmesser der Schneidelemente ist. Beim Schichtaufbau wird nach dem Platzieren der Schneidelemente in die Kavitäten eine weitere Werkstoffschicht aufgetragen. Über die Schichtdicke der Werkstoffschicht kann bestimmt werden, ob und wie weit die Schneidelemente an der Oberseite vorstehen.

Nachdem die zweiten Kavitäten 27 mit dem Spezialwerkstoff 48 befüllt sind, wird der Schichtaufbau des ersten Grünlings 10 fortgesetzt. Die Aufbauebene 43 wird in Verstellrichtung 45 um die fünfte Schichtdicke d₅ abgesenkt und eine fünfte Pulverschicht 52 des pulverförmigen Werkstoffs 41 wird mit Hilfe der Pulverzuführung aufgetragen (FIG. 4S). Der Druckkopf trägt im fünften Werkstoffbereich 25 eine fünfte Klebeschicht auf, die die losen Pulverpartikel der fünften Pulverschicht 52 im fünften Werkstoffbereich 25 verbindet (FIG. 4T). Nach dem Verbinden der losen Pulverpartikel im fünften Werkstoffbereich 25 ist der Schichtaufbau des ersten Grünlings 10 abgeschlossen. Der erste Grünling 10 wird in einem nachfolgenden Verdichtungsprozess, beispielsweise durch Heißpressen und/oder Sintern zu einem Bearbeitungssegment für ein abrasives Bearbeitungswerkzeug verdichtet.

Der erste Grünling 10 wird schichtweise aus fünf Werkstoffbereichen 17, 18, 21, 23, 25 mit dem gleichen pulverförmigen Werkstoff 41 hergestellt. Alternativ können die Werkstoffbereiche des ersten Grünlings 10 aus unterschiedlichen pulverförmigen Werkstoffen 41 hergestellt werden. Bei Grünlingen, die zu Bearbeitungssegmenten für abrasive Bearbeitungswerkzeuge weiterverarbeitet werden, kann beispielsweise für den ersten Werkstoffbereich ein erster pulverförmiger Werkstoff und für die weiteren Werkstoffbereiche ein zweiter pulverförmiger Werkstoff verwendet werden, wobei die Eigenschaften des ersten pulverförmigen Werkstoffs im Hinblick auf die Verbindung der Bearbeitungssegmente mit dem Grundkörper und die Eigenschaften des zweiten pulverförmigen Werkstoffs im Hinblick auf die mechanische Anbindung der Schneidelemente ausgewählt werden. Wenn die Bearbeitungssegmente und der Grundkörper verschweißt werden sollen, wird ein schweißbarer erster pulverförmiger Werkstoff ausgewählt.

Beim ersten Grünling 10 werden die Hartstoffpartikel 42 in den Spezialwerkstoff 48 eingebettet, wobei das Befüllen der ersten und zweiten Kavitäten 26, 27 in einem einteiligen oder zweiteiligen Füllverfahren erfolgt. Die Hartstoffpartikel 42 müssen nicht in den Spezialwerkstoff 48 eingebettet werden. Alternativ können die Hartstoffpartikel 42 in den ersten und zweiten Kavitäten 26, 27 in den pulverförmigen Werkstoff 41 platziert werden; das Entfernen des pulverförmigen Werkstoffs 41 aus den Kavitäten 26, 27 und das Befüllen der Kavitäten 26, 27 mit Spezialwerkstoff 48 entfällt in diesem Fall. Die Verwendung eines Spezialwerkstoffs 48 bietet sich an, wenn der erste Grünling 10 zur Verdichtung einer nachfolgenden Bearbeitung durch Heißpressen und/oder Sintern unterzogen wird und die Schneidelemente 42 beim Heißpressen und/oder Sintern durch den verwendeten pulverförmigen Werkstoff 41 beschädigt werden. Der Spezialwerkstoff 48 ist so ausgewählt, dass er eine chemische Verbindung mit dem pulverförmigen Werkstoff 41 bildet und die Schneidelemente 42 mechanisch bindet.

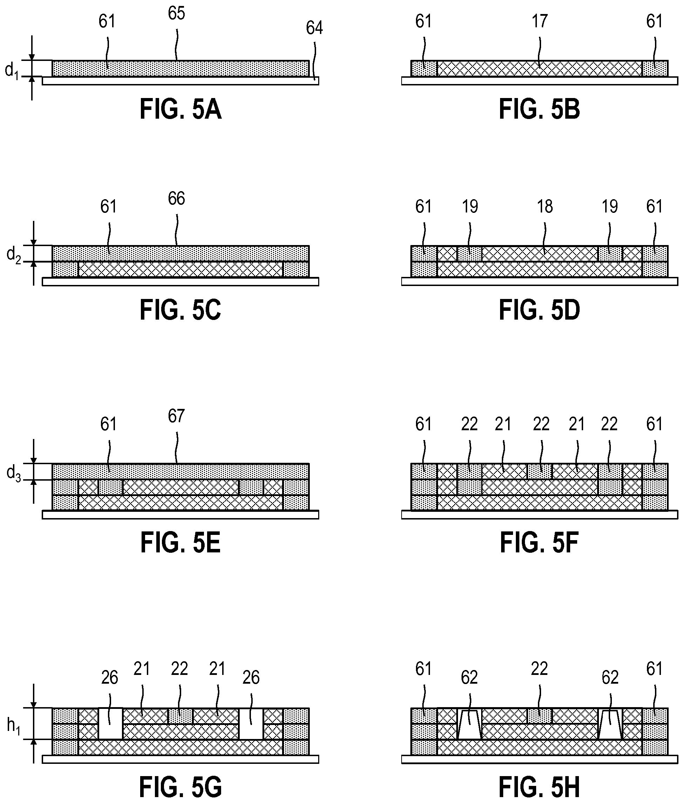

**FIGN. 5A-O** zeigen eine zweite Variante des erfindungsgemäßen Verfahrens zur schichtweisen Fertigung eines Grünlings **60** aus einem pulverförmigen Werkstoff **61** mit definiert angeordneten ersten Schneidelementen **62** und zweiten Schneidelementen **63,** wobei der Grünling 60 im Folgenden als zweiter Grünling 60 bezeichnet wird. Die Geometrie des zweiten Grünlings 60 entspricht dem in FIG. 1 gezeigten Quader 10, der in Aufbaurichtung 16 in die fünf zylinderförmigen Querschnittsbereiche 11, 12, 13, 14, 15 zerlegt ist (FIGN. 2A-E). Die Querschnittsbereiche 11-15 weisen parallel zur Aufbaurichtung 16 die Schichtdicke und senkrecht zur Aufbaurichtung 16 die Querschnittsfläche auf. Der erste Querschnittsbereich 11 weist den ersten Werkstoffbereich 17 auf, der zweite Querschnittsbereich 12 den zweiten Werkstoffbereich 18 und die fünf zweiten Setzbereiche 19, der dritte Querschnittsbereich 13 den dritten Werkstoffbereich 21 und die neun dritten Setzbereiche 22, der vierte Querschnittsbereich 14 den vierten Werkstoffbereich 23 und die vier vierten Setzbereiche 24 und der fünfte Querschnittsbereich 15 den fünften Werkstoffbereich 25.

Der zweite Grünling 60 wird schichtweise mit Hilfe einer Aufbauebene **64,** einer Pulverzuführung und eines Druckkopfes aufgebaut. Mit Hilfe der Pulverzuführung wird eine erste Pulverschicht 65 des pulverförmigen Werkstoffs 61 mit der ersten Schichtdicke d₁ aufgetragen (FIG. 5A). Der Druckkopf trägt im ersten Werkstoffbereich 17 eine erste Klebeschicht auf, die die losen Pulverpartikel der ersten Pulverschicht 65 im ersten Werkstoffbereich 17 verbindet, außerhalb des ersten Werkstoffbereiches 17 befinden sich lose Pulverpartikel (FIG. 5B). Mit Hilfe der Pulverzuführung wird eine zweite Pulverschicht **66** des pulverförmigen Werkstoffs 61 mit der zweiten Schichtdicke d₂ aufgetragen (FIG. 5C). Der Druckkopf trägt im zweiten Werkstoffbereich 18 eine zweite Klebeschicht auf, die die losen Pulverpartikel der zweiten Pulverschicht 66 im zweiten Werkstoffbereich 18 verbindet, wobei die Pulverpartikel in den zweiten Setzbereichen 19 und außerhalb des Grünlings 60 nicht verbunden werden (FIG. 5D). Mit Hilfe der Pulverzuführung wird eine dritte Pulverschicht **67** des pulverförmigen Werkstoffs 61 mit der dritten Schichtdicke d₃ aufgetragen (FIG. 5E). Der Druckkopf trägt im dritten Werkstoffbereich 21 eine dritte Klebeschicht auf, die die losen Pulverpartikel der dritten Pulverschicht 67 im dritten Werkstoffbereich 21 verbindet, wobei die Pulverpartikel in den dritten Setzbereichen 22 und außerhalb des zweiten Grünlings 60 nicht verbunden werden (FIG. 5F).

Die erste Einsatzhöhe h₁ der ersten Kavitäten 26 ist nach dem Auftragen der dritten Pulver-und Klebeschichten erreicht, so dass das Platzieren der ersten Schneidelemente 62 in die ersten Kavitäten 26 erfolgen kann. Die losen Pulverpartikel des pulverförmigen Werkstoffs 61 werden im Bereich der ersten Kavitäten 26 mit Hilfe einer Absaugeinrichtung abgesaugt (FIG. 5G). Dabei können zwei Varianten unterschieden werden: In einer ersten Variante werden die losen Pulverpartikel des pulverförmigen Werkstoffs 61 vollständig aus den ersten Kavitäten 26 entfernt und in einer zweiten Variante werden die losen Pulverpartikel nur teilweise aus den ersten Kavitäten 26 entfernt, ein Teil der losen Pulverpartikel verbleibt in den ersten Kavitäten 26. Die Entscheidung für die erste oder zweite Variante hängt vor allem von der Form der ersten Schneidelemente 62 ab, die in den ersten Kavitäten 26 angeordnet werden. Bei Bearbeitungssegmenten für abrasive Bearbeitungswerkzeuge sind die Schneidelemente mechanisch in der Matrix gebunden. Daher ist wichtig, dass die Schneidelemente in den Kavitäten möglichst vollumfänglich vom pulverförmigen Werkstoff umgeben werden. Alternativ kann ein Spezialwerkstoff, wie in Zusammenhang mit dem ersten Grünling 10 beschrieben, die Schneidelemente umgeben und für eine sichere mechanische Anbindung sorgen.

FIG. 5G zeigt die ersten Kavitäten 26 des zweiten Grünlings 60, wobei die losen Pulverpartikel des pulverförmigen Werkstoffs 61 vollständig entfernt wurden. Die ersten Schneidelemente 62 weisen eine Geometrie ohne Hinterschneidungen auf, so dass die ersten Kavitäten 26 nach dem Platzieren der ersten Schneidelemente 62 problemlos mit dem pulverförmigen Werkstoff 61 oder einem Spezialwerkstoff befüllt werden können. Die zweite Variante, bei der die losen Pulverpartikel des pulverförmigen Werkstoffs 61 nur teilweise aus den ersten Kavitäten 26 entfernt werden, bietet sich beispielsweise bei Schneidelementen an, bei denen die ersten Kavitäten 26 nach dem Platzieren der Schneidelemente nicht problemlos mit dem pulverförmigen Werkstoff 61 oder dem Spezialwerkstoff befüllt werden können.

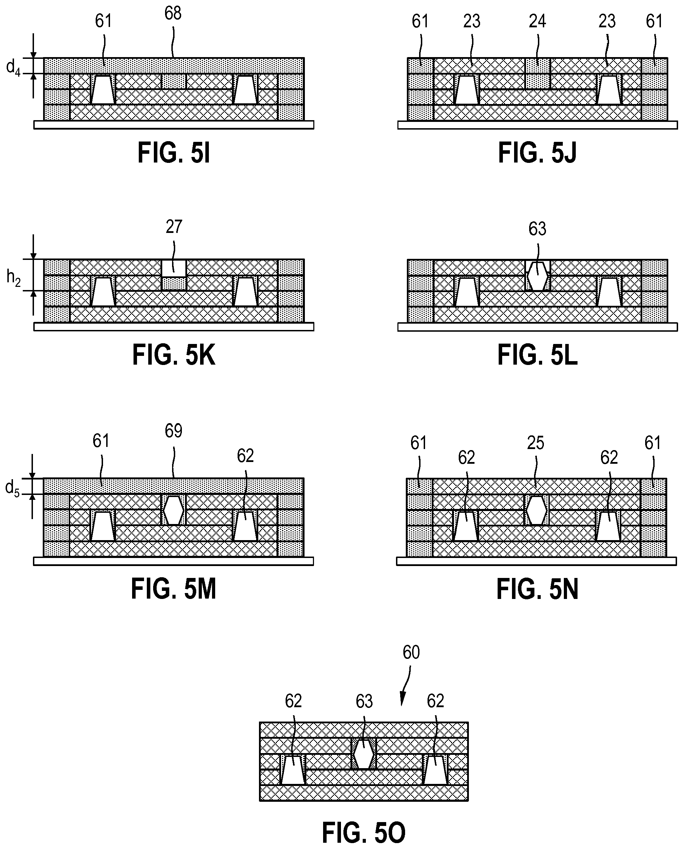

Nachdem die ersten Schneidelemente 62 in den ersten Kavitäten 26 angeordnet sind (FIG. 5H), wird der Schichtaufbau des zweiten Grünlings 60 fortgesetzt. Mit Hilfe der Pulverzuführung wird eine vierte Pulverschicht **68** des pulverförmigen Werkstoffes 61 mit der vierten Schichtdicke d₄ aufgetragen (FIG. 5I). Der Druckkopf trägt im vierten Werkstoffbereich 23 eine vierte Klebeschicht auf, die die losen Pulverpartikel der vierten Pulverschicht 68 im vierten Werkstoffbereich 23 verbindet, wobei die Pulverpartikel in den vierten Setzbereichen 24 und außerhalb des zweiten Grünlings 60 nicht verbunden werden (FIG. 5J). Die zweite Einsatzhöhe h₂ der zweiten Kavitäten 27 ist nach dem Auftragen der vierten Pulver- und Klebeschichten erreicht, so dass das Platzieren der zweiten Schneidelemente 63 in die zweiten Kavitäten 27 erfolgen kann.

Die losen Pulverpartikel des pulverförmigen Werkstoffs 61 werden im Bereich der zweiten Kavitäten 27 mit Hilfe der Absaugeinrichtung teilweise abgesaugt, ein Teil der losen Pulverpartikel verbleibt in den zweiten Kavitäten 27 (FIG. 5K). Anschließend werden die zweiten Schneidelemente 63 in den zweiten Kavitäten 27 angeordnet (FIG. 5L). Nachdem die zweiten Schneidelemente 63 in den zweiten Kavitäten 27 angeordnet sind, wird der Schichtaufbau des zweiten Grünlings 60 fortgesetzt. Mit Hilfe der Pulverzuführung wird eine fünfte Pulverschicht **69** des pulverförmigen Werkstoffes 61 mit der fünften Schichtdicke d₅ aufgetragen (FIG. 5M). Der Druckkopf trägt im fünften Werkstoffbereich 25 eine fünfte Klebeschicht auf, die die losen Pulverpartikel der fünften Pulverschicht 69 im fünften Werkstoffbereich 25 verbindet, wobei die Pulverpartikel außerhalb des zweiten Grünlings 60 nicht verbunden werden (FIG. 5N). FIG. 5O zeigt den aus dem pulverförmigen Werkstoff 61 schichtweise aufgebauten zweiten Grünling 60 mit definiert angeordneten ersten und zweiten Schneidelementen 62,63.

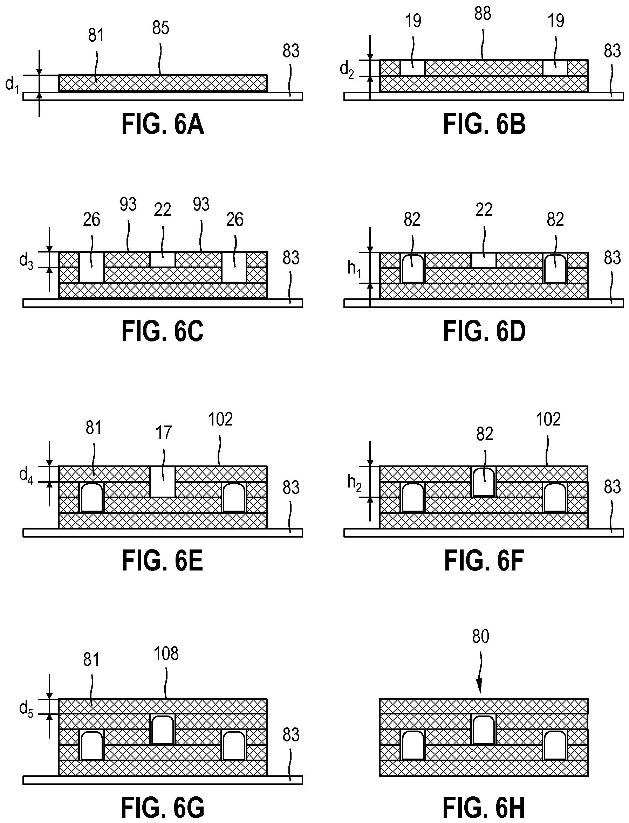

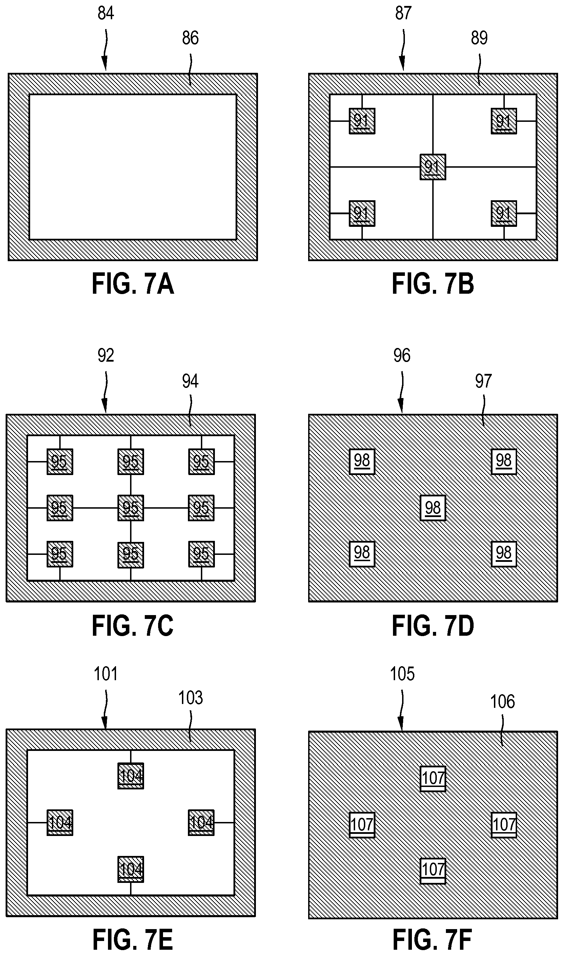

**FIGN. 6A-H** zeigen eine dritte Variante des erfindungsgemäßen Verfahrens zur schichtweisen Fertigung eines Grünlings **80** aus einem pastenförmigen Werkstoff **81** mit definiert angeordneten Schneidelementen **82,** wobei der Grünling 80 im Folgenden als dritter Grünling 80 bezeichnet wird. Die Geometrie des dritten Grünlings 80 entspricht dem in FIG. 1 gezeigten Quader 10, der in Aufbaurichtung 16 in die fünf zylinderförmigen Querschnittsbereiche 11, 12, 13, 14, 15 zerlegt ist. Der dritte Grünling 80 wird schichtweise mit Hilfe einer Vorrichtung hergestellt, die eine Aufbauebene **83,** eine Zuführung für den pastenförmigen Werkstoff 81, vier Werkstoff-Schablonen und zwei Einsatz-Schablonen umfasst. **FIGN. 7A-F** zeigen die Werkstoff- und Einsatz-Schablonen, die bei der dritten Variante des erfindungsgemäßen Verfahrens zur schichtweisen Fertigung eingesetzt werden. Dabei ist für jede unterschiedliche Werkstoffschicht und jede unterschiedliche Anordnung an Schneidelementen 82 eine passende Werkstoff-Schablone bzw. Einsatz-Schablone vorgesehen.

Eine erste Werkstoff-Schablone **84** (FIG. 7A) wird auf der Aufbauebene 83 angeordnet und eine erste Werkstoffschicht **85** des pastenförmigen Werkstoffs 81 mit der ersten Schichtdicke d₁ wird aufgetragen (FIG. 6A). Die erste Werkstoff-Schablone 84 weist einen Rahmen **86** auf, der den ersten Werkstoffbereich 17 umgibt. Die erste Werkstoff-Schablone 84 wird entfernt, eine zweite Werkstoff-Schablone **87** (FIG. 7B) wird auf der Aufbauebene 83 angeordnet und eine zweite Werkstoffschicht **88** des pastenförmigen Werkstoffs 81 mit der zweiten Schichtdicke d₂ wird auf die erste Werkstoffschicht 85 aufgetragen (FIG. 6B). Die zweite Werkstoff-Schablone 87 weist einen Rahmen **89** und fünf zweite Abdeckelemente **91** auf, wobei die zweiten Abdeckelemente 91 den zweiten Setzbereichen 19 des zweiten Querschnittsbereichs 12 entsprechen und mit dem Rahmen 89 verbunden sind. Die zweite Werkstoff-Schablone 87 wird entfernt, eine dritte Werkstoff-Schablone **92** (FIG. 7C) wird auf der Aufbauebene 83 angeordnet und eine dritte Werkstoffschicht **93** des pastenförmigen Werkstoffs 81 mit der dritten Schichtdicke d₃ wird auf die zweite Werkstoffschicht 88 aufgetragen (FIG. 6C). Die dritte Werkstoff-Schablone 92 weist einen Rahmen **94** und neun dritte Abdeckelemente **95** auf, wobei die dritten Abdeckelemente 95 den dritten Setzbereichen 22 des dritten Querschnittsbereichs 13 entsprechen und mit dem Rahmen 94 verbunden sind.

Die erste Einsatzhöhe h₁ der ersten Kavitäten 26 ist nach dem Auftragen der dritten Werkstoffschicht 93 erreicht, so dass das Platzieren der Schneidelemente 82 in die ersten Kavitäten 26 erfolgen kann. Die dritte Werkstoff-Schablone 92 wird entfernt, eine erste Einsatz-Schablone **96** (FIG. 7D) wird auf der Aufbauebene 83 angeordnet und die Schneidelemente 82 werden mittels der ersten Einsatz-Schablone 96 in den ersten Kavitäten 26 angeordnet (FIG. 6D). Die erste Einsatz-Schablone 96 umfasst eine Platte **97** mit fünf ersten Öffnungen **98,** die den fünf ersten Kavitäten 26 entsprechen. Die erste Einsatz-Schablone 96 wird entfernt, eine vierte Werkstoff-Schablone **101** (FIG. 7E) wird auf der Aufbauebene 83 angeordnet und eine vierte Werkstoffschicht **102** des pastenförmigen Werkstoffs 81 mit der vierten Schichtdicke d₄ wird auf die dritte Werkstoffschicht 93 aufgetragen (FIG. 6E). Die vierte Werkstoff-Schablone 101 weist einen Rahmen **103** und vier vierte Abdeckelemente **104** auf, wobei die vierten Abdeckelemente 104 den vierten Setzbereichen 24 des vierten Querschnittsbereichs 14 entsprechen und mit dem Rahmen 103 verbunden sind.

Die zweite Einsatzhöhe h₂ der zweiten Kavitäten 27 ist nach dem Auftragen der vierten Werkstoffschicht 102 erreicht, so dass das Platzieren der Schneidelemente 82 in die zweiten Kavitäten 27 erfolgen kann. Die vierte Werkstoff-Schablone 101 wird entfernt, eine zweite Einsatz-Schablone **105** (FIG. 7F) wird auf der Aufbauebene 83 angeordnet und die Schneidelemente 82 werden mittels der zweiten Einsatz-Schablone 105 in den zweiten Kavitäten 27 angeordnet (FIG. 6F). Die zweite Einsatz-Schablone 105 umfasst eine Platte **106** mit vier zweiten Öffnungen **107,** die den vier zweiten Kavitäten 27 entsprechen. Die zweite Einsatz-Schablone 105 wird entfernt, eine fünfte Werkstoff-Schablone wird auf der Aufbauebene 83 angeordnet und eine fünfte Werkstoffschicht **108** des pastenförmigen Werkstoffs 81 mit der fünften Schichtdicke d₅ wird auf die vierte Werkstoffschicht 102 aufgetragen (FIG. 6G). Da der erste und fünfte Querschnittsbereich 11, 15 des dritten Grünlings 80 übereinstimmen, entspricht die Geometrie der fünften Werkstoff-Schablone der ersten Werkstoff-Schablone 84. Da auch die Schichtdicken d₁, d₅ der ersten und fünften Werkstoffschicht 85, 108 übereinstimmen, sind die erste Werkstoff-Schablone 84 und die fünfte Werkstoff-Schablone identisch. FIG. 6H zeigt den aus dem pastenförmigen Werkstoff 81 schichtweise aufgebauten dritten Grünling 80. Bei einem Grünling, bei dem sich die erste und fünfte Schichtdicke unterscheiden, sind die erste und fünfte Werkstoff-Schablone nicht identisch. Die Geometrie einer Werkstoff-Schablone wird durch die Querschnittsfläche und die Schichtdicke bestimmt.

Die Schneidelemente 82 des dritten Grünlings 80 können wie die Schneidelemente 42 des ersten Grünlings 10 in einen Spezialwerkstoff eingebettet werden, wobei das Befüllen der ersten und zweiten Kavitäten 26, 27 in einem einteiligen oder zweiteiligen Füllverfahren erfolgen kann. Die Verwendung eines Spezialwerkstoffs bietet sich an, wenn der dritte Grünling 80 zur Verdichtung einer nachfolgenden Bearbeitung durch Heißpressen und/oder Sintern unterzogen wird und die Schneidelemente 82 beim Heißpressen und/oder Sintern durch den verwendeten pastenförmigen Werkstoff 81 beschädigt werden. Der Spezialwerkstoff wird so ausgewählt, dass er eine chemische Verbindung mit dem pastenförmigen Werkstoff 81 bildet und die Schneidelemente 82 mechanisch bindet.

## Patentansprüche

1. Verfahren zur schichtweisen Fertigung eines Grünlings (10; 60; 80) aus pulver- oder pastenförmigem Werkstoff (41; 61; 81) mit definiert angeordneten Schneidelementen (42; 62, 63; 82) basierend auf dreidimensionalen Daten des Grünlings (10; 60; 80), wobei der Grünling (10; 60; 80) in einer Aufbaurichtung (16) in N (N ≥ 2) aufeinanderfolgende zylinderförmige Querschnittsbereiche (11, 12, 13, 14, 15) aus einer zweidimensionalen Querschnittsfläche senkrecht zur Aufbaurichtung (16) und einer Schichtdicke (d₁, d₂, d₃, d₄, d₅) parallel zur Aufbaurichtung (16) zerlegt wird, **gekennzeichnet durch** die Verfahrensschritte:
▪ die Querschnittsbereiche (11, 12, 13, 14, 15) des Grünlings (10; 60; 80) werden jeweils in Werkstoffbereiche (17, 18, 21, 23, 25), die aus dem pulver- oder pastenförmigen Werkstoff (41; 61; 81) hergestellt werden, und Setzbereiche (19, 22, 24), in denen die Schneidelemente (42; 62, 63; 82) angeordnet werden, unterteilt,
▪ auf eine Aufbauebene (43; 64; 83), die senkrecht zur Aufbaurichtung (16) angeordnet ist, werden die Werkstoffbereiche eines Querschnittsbereichs oder die Werkstoffbereiche (18, 21; 21, 23) mehrerer in Aufbaurichtung (16) aufeinanderfolgender Querschnittsbereiche (12, 13, 14, 15) aufgebracht, bis mindestens eine Kavität (26, 27), die **durch** einen Setzbereich oder mehrere in Aufbaurichtung (16) aufeinanderfolgende Setzbereiche (19, 22; 22, 24) gebildet wird, in Aufbaurichtung (16) eine zum Anordnen der Schneidelemente (42; 62, 63; 82) erforderliche Einsatzhöhe (h₁, h₂) aufweist, und
▪ in die Kavitäten (26, 27), die die zum Anordnen der Schneidelemente (42; 62, 63; 82) erforderliche Einsatzhöhe (h₁, h₂) aufweisen, wird mindestens ein Schneidelement (42; 62, 63; 82) angeordnet.

2. Verfahren nach Anspruch 1, **dadurch gekennzeichnet, dass** die zum Anordnen der Schneidelemente (42; 62, 63; 82) erforderliche Einsatzhöhe (h₁, h₂) der Kavitäten (26, 27) kleiner als ein minimaler Durchmesser (Dₘᵢₙ) der Schneidelemente (42; 62, 63; 82) ist.

3. Verfahren nach Anspruch 1, **dadurch gekennzeichnet, dass** die zum Anordnen der Schneidelemente (42; 62, 63; 82) erforderliche Einsatzhöhe (h₁, h₂) der Kavitäten (26, 27) grösser als ein maximaler Durchmesser (Dₘₐₓ) der Schneidelemente (42; 62, 63; 82) ist.

4. Verfahren nach einem der Ansprüche 2 bis 3, **dadurch gekennzeichnet, dass** die Kavitäten (26, 27), die die erforderliche Einsatzhöhe (h₁, h₂) aufweisen, neben den Schneidelementen (42; 62, 63; 82) mit Spezialwerkstoff (48) befüllt werden.

5. Verfahren nach Anspruch 4, **dadurch gekennzeichnet, dass** das Befüllen der Kavitäten (26, 27), die die erforderliche Einsatzhöhe (h₁, h₂) aufweisen, mit Spezialwerkstoff (48) in einem Verfahrensschritt durchgeführt wird.

6. Verfahren nach Anspruch 5, **dadurch gekennzeichnet, dass** das Befüllen der Kavitäten (26, 27) mit Spezialwerkstoff (48) vor dem Anordnen der Schneidelemente (42; 62, 63; 82) durchgeführt wird.

7. Verfahren nach Anspruch 5, **dadurch gekennzeichnet, dass** das Befüllen der Kavitäten (26, 27) mit Spezialwerkstoff (48) nach dem Anordnen der Schneidelemente (42; 62, 63; 82) durchgeführt wird.

8. Verfahren nach Anspruch 4, **dadurch gekennzeichnet, dass** das Befüllen der Kavitäten (26, 27), die die erforderliche Einsatzhöhe (h₁, h₂) aufweisen, mit Spezialwerkstoff (48) in zwei Verfahrensschritten durchgeführt wird, wobei ein erster Teil des Spezialwerkstoffs (48) vor dem Anordnen der Schneidelemente (42; 62, 63; 82) in die Kavitäten (26, 27) eingefüllt wird, die Schneidelemente (42; 62, 63; 82) in den ersten Teil des Spezialwerkstoffs (48) platziert werden und ein zweiter Teil des Spezialwerkstoffs (48) nach dem Anordnen der Schneidelemente (42; 62, 63; 82) in die Kavitäten (26, 27) eingefüllt wird.

9. Verfahren nach einem der Ansprüche 1 bis 8, **dadurch gekennzeichnet, dass** die Schneidelemente (42; 62, 63; 82) zumindest teilweise mit einem Klebemittel (51) in den Kavitäten (26, 27) befestigt werden.

10. Verfahren nach Anspruch 9, **dadurch gekennzeichnet, dass** die Kavitäten (26, 27), die die erforderliche Einsatzhöhe (h₁, h₂) aufweisen, vor dem Anordnen der Schneidelemente (42; 62, 63; 82) mit dem Klebemittel (51) befüllt werden.

11. Verfahren nach Anspruch 9, **dadurch gekennzeichnet, dass** die Schneidelemente (42; 62, 63; 82) vor dem Anordnen der Schneidelemente (42; 62, 63; 82) in die Kavitäten (26, 27) zumindest teilweise mit dem Klebemittel (51) benetzt werden.
